# FASCICULE DE BREVET EUROPEEN

(11) **EP 3 163 118 B1**
(45) Date de publication et mention de la délivrance du brevet: **21.03.2018**
(21) Numéro de dépôt: 16195696.6
(22) Date de dépôt: 26.10.2016
(51) Int. Cl.: F16F 15/14

(54) **DISPOSITIF D'AMORTISSEMENT D'OSCILLATIONS DE TORSION**
VORRICHTUNG ZUR TORSIONSSCHWINGUNGSDÄMPFUNG
DEVICE FOR DAMPING TORSIONAL OSCILLATIONS

(30) Priorité: 02.11.2015 FR 1560457
(43) Date de publication de la demande: 03.05.2017
(73) Titulaire: Valeo Embrayages, 80009 Amiens Cedex 2 (FR)
(72) Inventeur: CAILLERET, Franck, 80009 AMIENS (FR); BARRY, Alain, 80470 Saint Sauveur (FR); TONDELLIER, Clément, 31300 TOULOUSE (FR); VERHOOG, Roel, 60190 GOURNAY SUR ARONDE (FR)
(74) Mandataire: Cardon, Nicolas

(56) Documents cités:
- EP-A1- 2 607 743
- WO-A1-2013/156733
- FR-A1- 3 018 882

## Description

La présente invention concerne un dispositif d'amortissement d'oscillations de torsion, notamment pour un système de transmission de véhicule automobile.

Dans une telle application, le dispositif d'amortissement d'oscillations de torsion peut être intégré à un système d'amortissement de torsion d'un embrayage apte à relier sélectivement le moteur thermique à la boîte de vitesses, afin de filtrer les vibrations dues aux acyclismes du moteur.

En variante, dans une telle application, le dispositif d'amortissement d'oscillations de torsion peut être intégré à un disque d'embrayage à friction ou à un convertisseur de couple hydrodynamique.

Un tel dispositif d'amortissement d'oscillations de torsion met classiquement en oeuvre un support et un ou plusieurs corps pendulaires mobiles par rapport à ce support, le déplacement par rapport au support de chaque corps pendulaire étant guidé par deux organes de roulement coopérant d'une part avec des pistes de roulement solidaires du support, et d'autre part avec des pistes de roulement solidaires des corps pendulaires. Chaque corps pendulaire comprend par exemple deux masses pendulaires reliées entre elles par un ou plusieurs organes de liaison.

On connaît, par exemple de la demande WO2013/057440, un corps pendulaire dont chaque organe de liaison définit une piste de roulement sur laquelle roule un organe de roulement. L'organe de roulement ne présente alors pas d'extrémité reçue dans des cavités ménagées dans les masses et l'arrêt de l'organe de roulement au-delà d'une position limite ne peut alors se faire par les extrémités circonférentielles de ces cavités.

La demande FR 3018882 divulgue un dispositif d'amortissement pendulaire selon le préambule de la revendication 1.

Il existe un besoin pour éviter le déplacement d'un organe de roulement dans des positions non souhaitées au-delà d'une position limite.

L'invention a pour but de répondre à ce besoin, et elle y parvient selon l'un de ses aspects, à l'aide d'un dispositif d'amortissement d'oscillations de torsion, comprenant :
- au moins un support apte à se déplacer en rotation autour d'un axe,
- une pluralité de corps pendulaires mobiles par rapport au support, chaque corps pendulaire comprenant :
   - une première et une deuxième masses pendulaires espacées axialement l'une par rapport à l'autre, la première masse pendulaire étant disposée axialement d'un premier côté du support et la deuxième masse pendulaire étant disposée axialement d'un deuxième côté du support, et
   - au moins deux organes de liaison de la première et de la deuxième masses pendulaires, appariant lesdites masses.
- une pluralité d'organes de roulement, chaque organe de roulement coopérant avec une première piste de roulement solidaire du support et avec une deuxième piste de roulement solidaire d'un corps pendulaire et définie par un des organes de liaison de ce corps pendulaire, de manière à guider le déplacement de ce corps pendulaire par rapport au support,
chaque corps pendulaire comprenant pour chaque organe de roulement guidant le déplacement de ce corps pendulaire au moins un organe de butée, cet organe de butée faisant saillie dans l'espace axial défini entre les deux masses pendulaires de ce corps pendulaire de manière à empêcher le déplacement de l'organe de roulement au-delà d'au moins une position de butée.

L'organe de butée permet ainsi que la dimension de l'espace axial défini entre les deux masses pendulaires du corps pendulaire soit localement inférieur à la dimension axiale de l'organe de roulement, de manière à ce que ce dernier ne puisse en conséquence se déplacer au-delà de l'organe de butée qui forme ainsi au moins une position de butée pour le déplacement de cet organe de roulement. La dimension axiale de l'espace axial défini entre les deux masses pendulaires au niveau de l'organe de butée pour l'organe de roulement peut rester supérieure à la dimension axiale du support, de manière à ce que la présence de cet organe de butée n'entrave pas le déplacement du corps pendulaire par rapport au support.

L'organe de butée peut comprendre :
- une portion faisant saillie dans l'espace axial défini entre les deux masses pendulaires du corps pendulaire de manière à empêcher le déplacement de l'organe de roulement depuis la position de repos au-delà d'une position de butée dans le sens trigonométrique et
- une portion faisant saillie dans l'espace axial défini entre les deux masses pendulaires du corps pendulaire de manière à empêcher le déplacement de l'organe de roulement depuis la position de repos au-delà d'une position de butée dans le sens non-trigonométrique.

Autrement dit, un seul et même organe de butée s'étendant continument peut alors permettre l'arrêt d'un organe de roulement dans le sens trigonométrique et l'arrêt de cet organe de roulement dans le sens non-trigonométrique. On parlera par la suite d'arrêt circonférentiel ou de butée circonférentielle des organes de roulement pour désigner de façon générale l'arrêt dans le sens trigonométrique depuis la position de repos et l'arrêt dans le sens non-trigonométrique depuis cette position de repos.

En variante, chaque corps pendulaire peut comprendre pour chaque organe de roulement guidant le déplacement de ce corps pendulaire deux organes de butée distincts, l'un de ces deux organes de butée faisant saillie dans l'espace axial défini entre les deux masses pendulaires du corps pendulaire de manière à empêcher le déplacement de l'organe de roulement depuis la position de repos au-delà d'une position de butée dans le sens trigonométrique et l'autre de ces deux organes de butée faisant saillie dans l'espace axial défini entre les deux masses pendulaires du corps pendulaire de manière à empêcher le déplacement de l'organe de roulement depuis la position de repos au-delà d'une position de butée dans le sens non-trigonométrique. Selon cette variante, deux organes de butée distincts sont prévus pour chaque organe de roulement. Il n'y a ainsi pas de continuité entre ces deux organes de butée.

Dans tout ce qui précède, l'angle mesuré depuis l'axe de rotation du support entre la position de repos de l'organe de roulement et l'une de ses positions de butée circonférentielles peut être supérieur à l'angle mesuré depuis l'axe de rotation du support entre cette position de repos et son autre position de butée circonférentielle. Autrement dit, un déplacement plus important de l'organe de roulement à partir de sa position de repos peut être permis circonférentiellement dans un sens par rapport à l'autre sens.

Pour un même corps pendulaire, l'organe de roulement le plus proche de l'extrémité du corps pendulaire dans le sens trigonométrique peut ainsi présenter une position de butée dans le sens non trigonométrique plus éloignée de sa position de repos que ne l'est sa position de butée dans le sens trigonométrique, tandis que l'organe de roulement le plus proche de l'extrémité du corps pendulaire dans le sens non trigonométrique peut présenter une position de butée dans le sens trigonométrique plus éloignée de sa position de repos que ne l'est sa position de butée dans le sens non-trigonométrique.

Dans tout ce qui précède, la position de butée dans le sens non-trigonométrique et la position de butée dans le sens trigonométrique sont avantageusement telles qu'elles ne limitent pas le déplacement de l'organe de roulement le long de la deuxième piste de roulement définie par un des organes de liaison du corps pendulaire. Autrement dit, ces positions de butée sont ménagées au-delà des extrémités de la deuxième piste de roulement, lorsque l'on se déplace depuis la position de repos.

Au sens de la présente demande :
- « axialement » signifie « parallèlement à l'axe de rotation du support »,
- « radialement » signifie « le long d'un axe appartenant à un plan orthogonal à l'axe de rotation du support et coupant cet axe de rotation du support»,
- « angulairement » ou « circonférentiellement » signifie « autour de l'axe de rotation du support »,
- « orthoradialement » signifie « perpendiculairement à une direction radiale », et
- « solidaire » signifie « rigidement couplé ».

Toujours au sens de la présente demande, la position de repos d'un élément du dispositif, par exemple d'un organe de roulement ou d'un corps pendulaire, est la position de cet élément lorsque les corps pendulaires sont soumis à une force centrifuge, mais non à des oscillations de torsion provenant d'acyclismes du moteur thermique.

Dans tout ce qui précède, chaque organe de butée pour organe de roulement peut présenter deux parties : une première partie faisant saillie dans l'espace axial en direction de la deuxième masse pendulaire, et une deuxième partie faisant saillie dans l'espace axial en direction de la première masse pendulaire, les premières et deuxièmes parties étant axialement superposées.

Selon un premier exemple de mise en oeuvre de l'invention, la première partie d'un organe de butée pour organe de roulement peut être formée par un premier plot faisant saillie en direction de la deuxième masse pendulaire et la deuxième partie de cet organe de butée est alors formée par un deuxième plot faisant saillie en direction de la première masse pendulaire. Chaque plot peut s'étendre sensiblement orthoradialement.

Le premier plot est par exemple réalisé d'une seule pièce avec la première masse pendulaire et le deuxième plot est alors réalisé d'une seule pièce avec la deuxième masse pendulaire.

Selon un deuxième exemple de mise en oeuvre de l'invention, la première partie d'un organe de butée pour organe de roulement peut être formée par une portion d'une première pièce d'interposition solidaire de la première masse pendulaire, cette première pièce d'interposition permettant d'éviter les contacts axiaux directs entre le support et cette première masse pendulaire, et la deuxième partie de cet organe de butée pour organe de roulement est alors formée par une portion d'une deuxième pièce d'interposition solidaire de la deuxième masse pendulaire, cette deuxième pièce d'interposition permettant d'éviter les contacts axiaux directs entre le support et cette deuxième masse pendulaire.

Les pièces d'interposition sont notamment réalisées en un matériau amortissant, tel que du plastique ou du caoutchouc.

Selon ce deuxième exemple de mise en oeuvre, on ajoute ainsi une fonction de butée pour organe de roulement à la pièce d'interposition encore appelée « patin axial ». Des patins axiaux peuvent être présents selon le premier exemple de mise en oeuvre de l'invention ci-dessus. De tels patins peuvent selon ce premier mode uniquement assurer la fonction d'interposition axiale entre support et masse(s) pendulaires.

Une première pièce d'interposition peut à elle seule définir une position de butée dans le sens trigonométrique et dans le sens non-trigonométrique pour le déplacement de l'organe de roulement depuis sa position de repos.

En variante, pour un même organe de roulement, deux premières pièces d'interposition distinctes peuvent être prévues, l'une de ces premières pièces d'interposition définissant une position de butée dans le sens trigonométrique pour le déplacement de l'organe de roulement depuis sa position de repos et l'autre première pièce d'interposition définissant une position de butée dans le sens non-trigonométrique pour le déplacement de l'organe de roulement depuis sa position de repos.

La première pièce d'interposition peut comprendre une zone d'interposition disposée axialement entre la première masse pendulaire et le support, cette zone d'interposition s'étendant de préférence angulairement de part et d'autre d'une ouverture de la première masse pendulaire dans laquelle est reçu un des organes de liaison du corps pendulaire, chaque extrémité angulaire de cette zone d'interposition définissant respectivement une première et une deuxième portion de la première partie de l'organe de butée pour organe de roulement. Ces deux portions de la première partie de l'organe de butée sont de préférence positionnées de manière à ce que l'ouverture de la première masse pendulaire s'étende à l'intérieur du secteur angulaire défini depuis l'axe de rotation du support entre ces deux portions. Chacune desdites portions de l'organe de butée peut s'étendre sensiblement radialement.

Un tel positionnement des portions de la première pièce d'interposition définissant les positions de butée permet de garantir que la présence des organes de butée ne limite pas le parcours de l'organe de roulement, et ne réduit ainsi pas les performances de filtrage fournies par le corps pendulaire.

Similairement à ce qui vient d'être mentionné, selon le deuxième exemple de mise en oeuvre de l'invention, la deuxième pièce d'interposition peut comprendre une zone d'interposition disposée axialement entre la deuxième masse pendulaire et le support, cette zone d'interposition s'étendant de préférence angulairement de part et d'autre d'une ouverture de la deuxième masse pendulaire dans laquelle est reçu un des organes de liaison du corps pendulaire, chaque extrémité angulaire de cette zone d'interposition définissant respectivement une première et une deuxième portion de la deuxième partie de l'organe de butée pour organe de roulement. Ces deux portions de la deuxième partie de l'organe de butée sont de préférence positionnées de manière à ce que l'ouverture de la deuxième masse pendulaire s'étende à l'intérieur du secteur angulaire défini depuis l'axe de rotation du support entre ces deux portions.

Comme déjà mentionné, un tel positionnement des portions de la deuxième pièce d'interposition définissant les positions de butée permet de garantir que la présence des organes de butée ne limite pas le parcours de l'organe de roulement, et ne réduit ainsi pas les performances de filtrage fournies par le corps pendulaire.

Selon une première variante de ce deuxième exemple de mise en oeuvre, la fraction de la zone d'interposition disposée entre les premières et deuxièmes portions de la première partie de l'organe de butée pour organe de roulement peut former un moyen d'interposition axiale entre l'organe de roulement et la première masse pendulaire. Cette fraction d'interposition empêche ainsi les contacts directs entre l'organe de roulement et la première masse pendulaire, réduisant ainsi les bruits et l'usure de ces pièces.

Similairement, la fraction de la zone d'interposition disposée entre les premières et deuxièmes portions de la deuxième partie de l'organe de butée pour organe de roulement peut former un moyen d'interposition axiale entre l'organe de roulement et la deuxième masse pendulaire.

Selon cette variante, la zone d'interposition peut présenter une dimension axiale variable. La dimension axiale de la zone d'interposition est ainsi plus grande au niveau de ses extrémités circonférentielles qui définissent une portion d'une partie de l'organe de butée qu'au niveau de sa fraction d'interposition.

Selon une deuxième variante, la fraction de la zone d'interposition disposée entre les premières et deuxièmes portions de la première, respectivement deuxième, partie de l'organe de butée pour organe de roulement peut s'étendre radialement ailleurs qu'au niveau de l'organe de roulement, notamment radialement extérieurement ou radialement intérieurement, par rapport à l'organe de roulement. Cette fraction de la zone d'interposition n'est alors pas interposée axialement entre l'organe de roulement et la masse pendulaire correspondante, de sorte que des chocs axiaux entre l'organe de roulement et cette masse pendulaire sont possibles.

Selon cette deuxième variante, la zone d'interposition peut présenter une dimension axiale sensiblement constante, cette dimension axiale étant alors la même au niveau de la fraction d'interposition et au niveau des extrémités circonférentielles de cette zone d'interposition qui définissent une portion d'une partie de l'organe de butée.

Selon le deuxième exemple de mise en oeuvre de l'invention, une unique première pièce d'interposition, c'est-à-dire une pièce d'interposition d'un seul tenant, peut coopérer avec la première masse pendulaire et avec le support de manière à éviter les contacts axiaux directs entre le support et cette première masse pendulaire, et une unique deuxième pièce d'interposition peut coopérer avec la deuxième masse pendulaire et avec le support de manière à éviter les contacts axiaux directs entre le support et cette deuxième masse pendulaire. De telles pièces d'interposition sont par exemple connues de la demande française de numéro de dépôt 15 60442 déposée le 30 octobre 2015 par la Demanderesse Lorsque le déplacement d'un corps pendulaire est guidé par deux organes de roulement, la première, respectivement deuxième, pièce d'interposition peut empêcher la venue en contact selon la direction axiale entre la première, respectivement deuxième, masse pendulaire et chaque organe de roulement, simultanément pour ces organes de roulement ou successivement pour ces organes de roulement. La première pièce d'interposition peut alors définir toutes les premières parties d'organe de butée de ce corps pendulaire et la deuxième pièce d'interposition peut définir toutes les deuxièmes parties d'organe de butée pour ce corps pendulaire.

Dans tout ce qui précède, chaque organe de roulement peut être reçu dans une fenêtre ménagée dans le support et une partie du contour de cette fenêtre, par exemple le bord radialement extérieur de cette fenêtre, définit la première piste de roulement pour cet organe de roulement. Chaque organe de liaison est par exemple reçu dans une fenêtre propre ménagée dans le support. Les deux organes de liaison guidant le déplacement d'un même corps pendulaire sont alors décalés angulairement.

La forme des premières et deuxièmes pistes de roulement peut être telle que chaque corps pendulaire soit déplacé par rapport au support à la fois :
- en translation autour d'un axe fictif parallèle à l'axe de rotation du support et,
- également en rotation autour du centre de gravité dudit corps pendulaire, un tel mouvement étant encore appelé « mouvement combiné » et divulgué par exemple dans la demande DE 10 2011 086 532.

En variante, la forme des premières et deuxièmes pistes de roulement précitées peut être telle que chaque corps pendulaire soit uniquement déplacé par rapport au support en translation autour d'un axe fictif parallèle à l'axe de rotation du support.

Dans tout ce qui précède, chaque organe de liaison peut être emmanché à force dans l'ouverture précitée ménagée dans une des masses pendulaires pour solidariser l'organe de liaison à cette masse pendulaire. En variante, une solidarisation de l'organe de liaison et des masses par soudure, notamment soudure laser, ou encore par rivetage est possible.

Chaque organe de roulement ne coopère par exemple qu'avec une seule deuxième piste de roulement.

Dans tout ce qui précède, chaque organe de roulement est par exemple un rouleau de section circulaire dans un plan perpendiculaire à l'axe de rotation du support. Ce rouleau peut comprendre une section transversale circulaire. Le rouleau, notamment ses extrémités axiales, peut être dépourvu de rebord annulaire fin. Le rouleau est par exemple réalisé en acier. Le rouleau peut être creux ou plein.

Le rouleau peut présenter un diamètre constant sur toute sa longueur.

Le dispositif comprend par exemple un nombre compris entre deux et huit, notamment trois ou six, corps pendulaires. Tous ces corps pendulaires peuvent se succéder circonférentiellement. Le dispositif peut ainsi comprendre une pluralité de plans perpendiculaires à l'axe de rotation dans chacun desquels tous les corps pendulaires sont disposés.

Dans tout ce qui précède, le support peut être réalisé d'une seule pièce, étant par exemple entièrement métallique.

Dans tout ce qui précède, chaque corps pendulaire peut être muni d'un ou plusieurs moyens d'amortissement de butée, permettant de réduire les chocs entre le corps pendulaire et le support à l'issue d'un déplacement du corps pendulaire depuis la position de repos pour filtrer une oscillation de torsion et/ou en cas de chute radiale du corps pendulaire, par exemple lors de l'arrêt du moteur thermique du véhicule.

Chaque moyen d'amortissement de butée est par exemple disposé radialement entre le bord radialement intérieur de l'organe de liaison et le bord radialement intérieur de la fenêtre du support dans laquelle cet organe de liaison est reçu.

Dans un exemple particulier de mise en oeuvre de l'invention, chaque corps pendulaire comprend deux organes de liaison, chaque organe de liaison coopère avec un organe de roulement, et chaque organe de liaison est associé à un moyen d'amortissement de butée.

Chaque moyen d'amortissement de butée peut présenter des propriétés élastiques permettant l'amortissement des chocs liés à la venue en contact du corps pendulaire et du support. Chaque moyen d'amortissement de butée est par exemple réalisé en élastomère ou en caoutchouc.

L'invention a encore pour objet, selon un autre de ses aspects, un composant pour système de transmission d'un véhicule automobile, le composant étant notamment un double volant amortisseur ou un disque d'embrayage à friction, ou un composant de groupe motopropulseur hybride, comprenant un dispositif d'amortissement d'oscillations de torsion tel que défini ci-dessus.

Le support du dispositif d'amortissement d'oscillations de torsion peut alors être l'un parmi :
- un voile du composant,
- une rondelle de guidage du composant,
- une rondelle de phasage du composant, ou
- un support distinct dudit voile, de ladite rondelle de guidage et de ladite rondelle de phasage.

L'invention pourra être mieux comprise à la lecture de la description qui va suivre d'exemples non limitatifs de mise en oeuvre de celle-ci et à l'examen du dessin annexé sur lequel :
- la figure 1 représente un dispositif d'amortissement d'oscillations de torsion selon l'invention,
- la figure 2 représente une masse pendulaire d'un corps pendulaire selon un premier exemple de mise en oeuvre de l'invention,
- la figure 3 représente le corps pendulaire selon le premier exemple de mise en oeuvre de l'invention lorsqu'il est au repos,
- la figure 4 est une vue en coupe selon IV-IV du corps pendulaire de la figure 3, - la figure 5 est une vue similaire à la figure 3, le corps pendulaire étant en butée contre le support à l'issue d'un déplacement depuis sa position de repos,
- la figure 6 représente en éclaté une masse pendulaire et une pièce d'interposition axiale d'un corps pendulaire selon une première variante d'un deuxième exemple de mise en oeuvre de l'invention,
- la figure 7 représente la masse pendulaire et la pièce d'interposition axiale de la figure 6 lorsqu'ils sont assemblés,
- la figure 8 représente en vue isolée la pièce d'interposition des figures 6 et 7,
- la figure 9 est une vue similaire à la figure 3 du corps pendulaire selon la première variante du deuxième exemple de mise en oeuvre de l'invention lorsqu'il est au repos,
- la figure 10 est une vue en coupe selon X-X du corps pendulaire de la figure 9, - la figure 11 est une vue similaire à la figure 9, le corps pendulaire étant en butée contre le support à l'issue d'un déplacement depuis sa position de repos,
- la figure 12 représente en éclaté une masse pendulaire et une pièce d'interposition axiale d'un corps pendulaire selon une deuxième variante d'un deuxième exemple de mise en oeuvre de l'invention,
- la figure 13 représente la masse pendulaire et la pièce d'interposition axiale de la figure 13 lorsqu'ils sont assemblés, et
- la figure 14 est une vue du corps pendulaire en butée contre le support à l'issue d'un déplacement depuis sa position de repos.

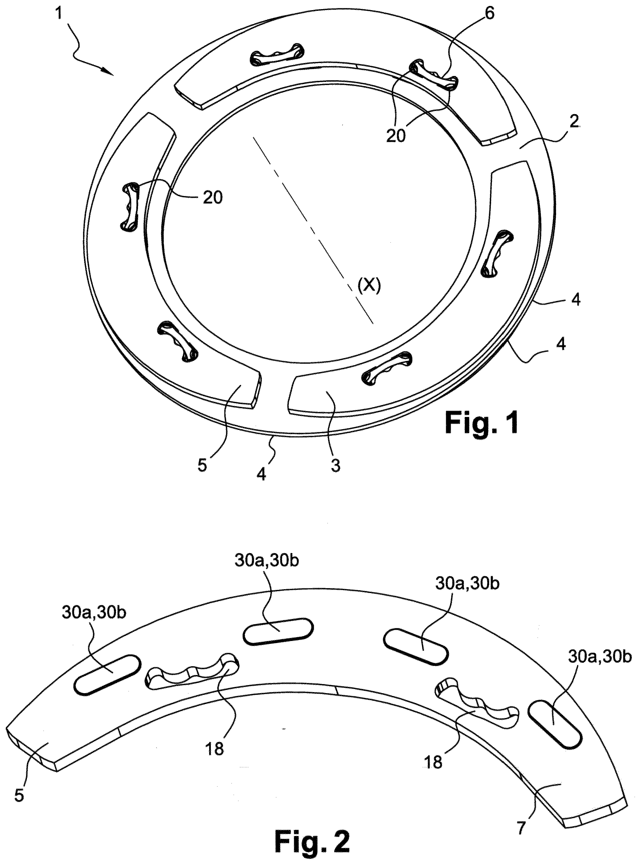

On a représenté sur la figure 1 un dispositif d'amortissement 1 d'oscillations de torsion. Le dispositif d'amortissement 1 est de type oscillateur pendulaire. Le dispositif 1 est notamment apte à équiper un système de transmission de véhicule automobile, étant par exemple intégré à un composant non représenté d'un tel système de transmission, ce composant étant par exemple un double volant amortisseur ou un disque d'embrayage à friction.

Ce composant fait ici partie d'un groupe motopropulseur d'un véhicule automobile, ce dernier comprenant un moteur thermique notamment à deux, respectivement trois, respectivement quatre, cylindres. L'ordre d'excitation du moteur thermique est alors respectivement égal à un, respectivement un et demi, respectivement deux.

Sur la figure 1, le dispositif 1 est au repos, c'est-à-dire qu'il ne filtre pas les oscillations de torsion transmises dans le groupe motopropulseur du fait des acyclismes du moteur thermique.

De manière connue, le composant auquel le dispositif d'amortissement 1 est intégré peut comprendre un amortisseur de torsion présentant au moins un élément d'entrée, au moins un élément de sortie, et des organes de rappel élastique à action circonférentielle qui sont interposés entre lesdits éléments d'entrée et de sortie. Au sens de la présente demande, les termes « entrée » et « sortie » sont définis par rapport au sens de transmission du couple depuis le moteur thermique du véhicule vers les roues de ce dernier.

Le dispositif 1 comprend dans l'exemple considéré:
- un support 2 apte à se déplacer en rotation autour d'un axe X, et
- une pluralité de corps pendulaires 3 mobiles par rapport au support 2.

Dans l'exemple considéré, trois corps pendulaires 3 sont prévus, étant répartis de façon uniforme sur le pourtour de l'axe X.

Le support 2 du dispositif d'amortissement 1 peut être constitué par :
- un élément d'entrée de l'amortisseur de torsion,
- un élément de sortie ou un élément de phasage intermédiaire disposé entre deux séries de ressort de l'amortisseur, ou
- un élément lié en rotation à un des éléments précités et distinct de ces derniers, étant alors par exemple un support propre au dispositif 1.

Le support 2 est notamment une rondelle de guidage ou une rondelle de phasage. En variante, le support 2 est un flasque du composant.

Dans l'exemple considéré, le support 2 présente globalement une forme d'anneau comportant deux côtés opposés 4 qui sont ici des faces planes.

Comme on le devine sur la figure 1, chaque corps pendulaire 3 comprend dans l'exemple considéré :
- deux masses pendulaires 5, chaque masse pendulaire 5 s'étendant axialement en regard d'un côté 4 du support 2, et
- deux organes de liaison 6 solidarisant les deux masses pendulaires 5.

Chaque masse pendulaire 5 présente ainsi une face 7 disposée axialement en regard d'un côté 4 du support 2 et une face 8, opposée à la face 7.

Les organes de liaison 6, encore appelés « entretoises », sont dans l'exemple considéré décalés angulairement.

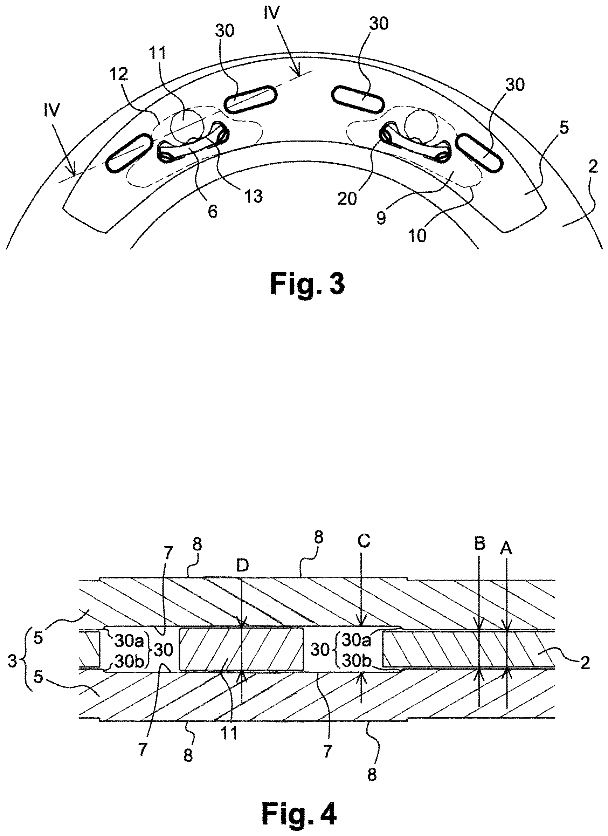

Chaque organe de liaison 6 s'étend, comme on peut par exemple le voir sur la figure 3, en partie dans une fenêtre 9 ménagée dans le support 2. Dans l'exemple considéré, la fenêtre 9 définit un espace libre à l'intérieur du support, cette fenêtre étant délimitée par un contour fermé 10. Chaque organe de liaison 6 est solidarisé à chaque masse pendulaire 5 d'un corps pendulaire 3 en étant par exemple emmanché en force dans une ouverture 18 ménagée dans ladite masse pendulaire 5.

Le dispositif 1 comprend encore dans les exemples considérés des organes de roulement 11, visibles sur les figures 3 à 5, 9 à 11 et 14, et guidant le déplacement des corps pendulaires 3 par rapport au support 2. Les organes de roulement 11 sont ici des rouleaux présentant une section transversale circulaire.

Dans les exemples décrits, le mouvement par rapport au support 2 de chaque corps pendulaire 3 est guidé par deux organes de roulement 11, chacun d'entre eux coopérant avec l'un des organes de liaison 6 de la masse pendulaire 3.

Chaque organe de roulement 11 coopère d'une part avec une première piste de roulement 12 solidaire du support 2, et qui est ici formée par une partie du contour 10 de la fenêtre 9 ménagée dans le support, et d'autre part avec une deuxième piste de roulement 13 solidaire du corps pendulaire 3, et qui est ici formée par une portion du contour extérieur de l'organe de liaison 6. La deuxième piste de roulement 13 est ici de forme concave, tout comme la première piste de roulement 12.

Plus précisément, chaque organe de roulement 11 interagit au niveau radialement intérieur avec la deuxième piste de roulement 13 et au niveau radialement extérieur avec la première piste de roulement 12 lors de son déplacement par rapport au support 2 et au corps pendulaire 3, étant par exemple uniquement sollicité en compression entre les pistes de roulement 12 et 13 mentionnées précédemment.

Comme on peut le voir sur la figure 1, le dispositif 1 peut également comprendre des moyens d'amortissement de butée 20 aptes à venir simultanément en contact avec un organe de liaison 6 et avec le support 2 dans certaines positions relatives du support 2 et des corps pendulaires 3, telles que les positions de venue en butée à l'issue d'un déplacement depuis la position de repos lors du filtrage d'une oscillation de torsion. Chaque moyen d'amortissement de butée 20 est ici solidaire d'un corps pendulaire 3, étant monté sur chaque masse pendulaire et disposé de manière à s'interposer radialement entre l'organe de liaison 6 et le contour 10 de l'ouverture 9.

Selon l'invention, un arrêt des organes de roulement est prévu afin que ces organes de roulement 11 ne viennent se déplacer au-delà de l'organe de liaison 6 le long duquel ils roulent. Un coincement d'un organe de roulement 11 dans une fenêtre 9 au-delà de l'organe de liaison 6 avec lequel il coopère est ainsi évité.

On va décrire en référence aux figures 2 à 6 un premier exemple de mise en oeuvre de l'invention.

Selon ce premier exemple de mise en oeuvre, deux organes de butée 30 sont associés à chaque organe de roulement 11. L'un des organes de butée 30 fournit une position de butée pour le déplacement de l'organe de roulement 11 dans le sens trigonométrique depuis sa position de repos lorsqu'une oscillation de torsion est filtrée par le corps pendulaire 3, tandis que l'autre organe de butée 30 fournit une position de butée pour le déplacement de l'organe de roulement 11 dans le sens non-trigonométrique depuis cette position de repos.

Chaque organe de butée 30 est selon ce premier exemple de mise en oeuvre réalisé en deux parties. Une première partie 30a d'un organe de butée 30 est formée par un plot ménagé sur la face 7 de la première masse pendulaire 5, comme on peut notamment le voir sur la figure 2. Ce plot 30a peut être formé par emboutissage de la masse pendulaire 5, de sorte qu'un creux existe sur la face 8 de cette première masse pendulaire 5 à l'endroit où le plot 30a est présent sur sa face 7. En variante, le plot 30a est formé autrement que par emboutissage, par exemple par moulage ou par usinage.

Similairement à ce qui vient d'être décrit, la deuxième partie 30b de l'organe de butée 30 est formée par un plot 30b ménagé sur la face 7 de la deuxième masse pendulaire 5.

Chaque plot 30a ou 30b est ici réalisé d'une seule pièce avec la masse pendulaire 5 correspondante et fait saillie axialement en direction de l'autre masse pendulaire 5. Ainsi, le plot 30a est ici réalisé d'une seule pièce avec la première masse pendulaire 5 et s'étendant axialement dans l'espace axial ménagé entre les deux masses pendulaires 5 du corps pendulaire 3 en direction de la deuxième masse pendulaire 5 tandis que le plot 30b est réalisé d'une seule pièce avec la deuxième masse pendulaire 5 et s'étend axialement en direction de la première masse pendulaire 5.

Comme on peut le voir sur la figure 3, les organes de butée 30 associés à un même organe de roulement 11 ne sont pas disposés de façon symétrique par rapport à la position de repos de cet organe de roulement 11 qui est représentée sur la figure 3, et cette dissymétrie est inversée d'un organe de roulement 11 à l'autre pour deux organes de roulement 11 associés à un même corps pendulaire 3.

Ainsi, sur la figure 3, le plot 30a assurant l'arrêt dans le sens trigonométrique de l'organe de roulement 11 de gauche, ie celui le plus proche de l'extrémité dans le sens trigonométrique du corps pendulaire 3, est disposé à une distance angulaire de la position de repos de cet organe de roulement 11 qui est inférieure à la distance angulaire entre la position de repos et le plot 30a assurant l'arrêt dans le sens non-trigonométrique de cet organe de roulement 11. Inversement, le plot 30a assurant l'arrêt dans le sens trigonométrique de l'organe de roulement 11 de droite sur la figure 3, ie celui le plus proche de l'extrémité dans le sens non-trigonométrique du corps pendulaire 3, est disposé à une distance angulaire de la position de repos de cet organe de roulement 11 qui est supérieure à la distance angulaire entre la position de repos et le plot 30a assurant l'arrêt dans le sens non-trigonométrique de cet organe de roulement 11.

Des plots 30b similaires sont ménagés sur la deuxième masse pendulaire 5 du corps pendulaire 3.

Comme on peut le voir sur la figure 4, l'espace axial défini entre deux faces 7 de masses pendulaires 5 d'un même corps pendulaire 3 présente une dimension axiale qui reste supérieure à la dimension axiale A du support 2, cette dimension axiale A étant mesurée parallèlement à l'axe de rotation X entre les deux côtés 4 du support 2.

La présence des plots 30a et 30b permet de réduire localement la dimension axiale de l'espace axial défini entre les masses pendulaires 5. Ainsi, on constate qu'ailleurs qu'au niveau des plots 30a et 30b, l'espace axial présente une dimension axiale C mesurée parallèlement à l'axe de rotation X, entre deux faces 7, qui est supérieure à la dimension axiale D de l'organe de roulement 11 correspondant. Cet organe de roulement 11 peut ainsi se déplacer dans l'espace axial ailleurs qu'au niveau des plots 30a et 30b. Les plots 30a et 30b, de par la saillie qu'ils font dans l'espace axial, conduisent à un rétrécissement local de cet espace axial qui prend alors une dimension axiale B, mesurée similairement à la dimension D, qui est inférieure à la dimension axiale C de l'organe de roulement. Grâce à ce rétrécissement axial, le déplacement de l'organe de roulement 11 au-delà des plots 30a et 30b depuis sa position de repos est entravé.

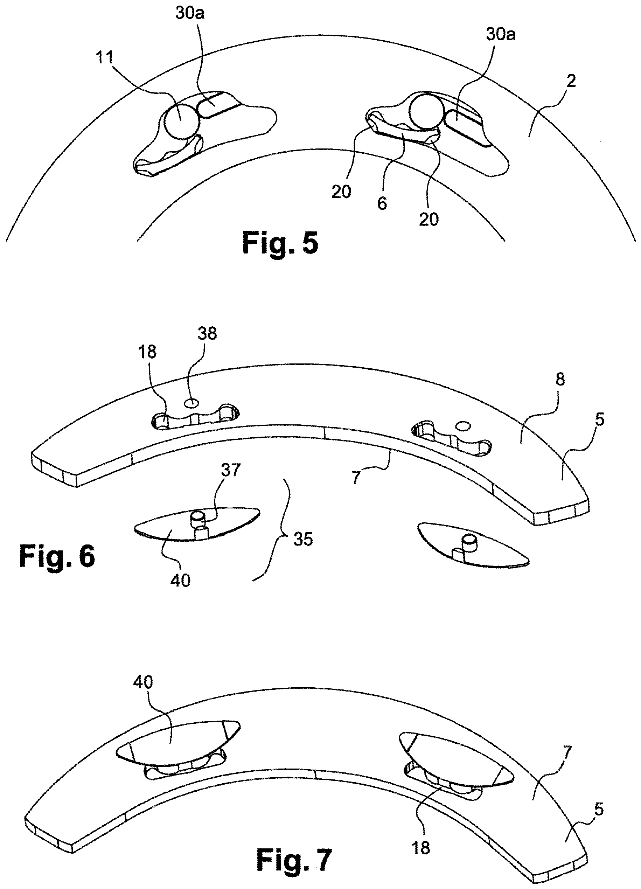

On constate ainsi sur la figure 5, sur laquelle seule la première masse pendulaire 5 est représentée dans un souci de clarté du dessin, et qui correspond à une position du corps pendulaire 3 en butée contre le support 2 à l'issue d'un déplacement depuis sa position de repos lors du filtrage d'une oscillation de torsion, que chaque organe de roulement 11 guidant le déplacement de ce corps pendulaire 3 repose contre un plot 30a. Le déplacement de chaque organe de roulement 11 dans la fenêtre 9 au-delà de l'organe de liaison 6 avec lequel il coopère est ainsi évité.

On va maintenant décrire en référence aux figures 6 à 14 deux variantes d'un deuxième exemple de mise en oeuvre de l'invention.

Ce deuxième exemple de mise en oeuvre de l'invention diffère essentiellement de celui qui vient d'être décrit par le fait qu'un seul et même organe de butée 30 est associé à un organe de roulement 11. Cet organe de butée 30 unique permet ainsi un arrêt circonférentiel du déplacement de cet organe de roulement 11 à la fois dans le sens trigonométrique et dans le sens non-trigonométrique.

Dans les deux variantes qui vont être décrites, cette fonction d'organe de butée pour organe de roulement est ajoutée à des pièces d'interposition axiales 35 qui sont connues de l'art antérieur.

Comme on peut le voir sur les figures 6 et 7, chaque masse pendulaire 5 est associée à deux pièces d'interposition 35. La première masse pendulaire 5 est ainsi associée à deux premières pièces d'interposition tandis que la deuxième masse pendulaire 5 est associée à deux deuxièmes pièces d'interposition.

Chaque pièce d'interposition 35 comprend :
- une partie de montage 37 permettant sa fixation dans un trou 38 ménagé dans une masse pendulaire 5, et
- une zone d'interposition 40 venant axialement entre le support 2 et la masse pendulaire 5 portant cette pièce d'interposition 35.

Dans l'exemple décrit, la zone d'interposition 40 présente une dimension circonférentielle supérieure à la dimension correspondante de l'ouverture 18 dans laquelle est montée un des organes de liaison 6 du corps pendulaire 3, comme cela est par exemple visible sur la figure 7.

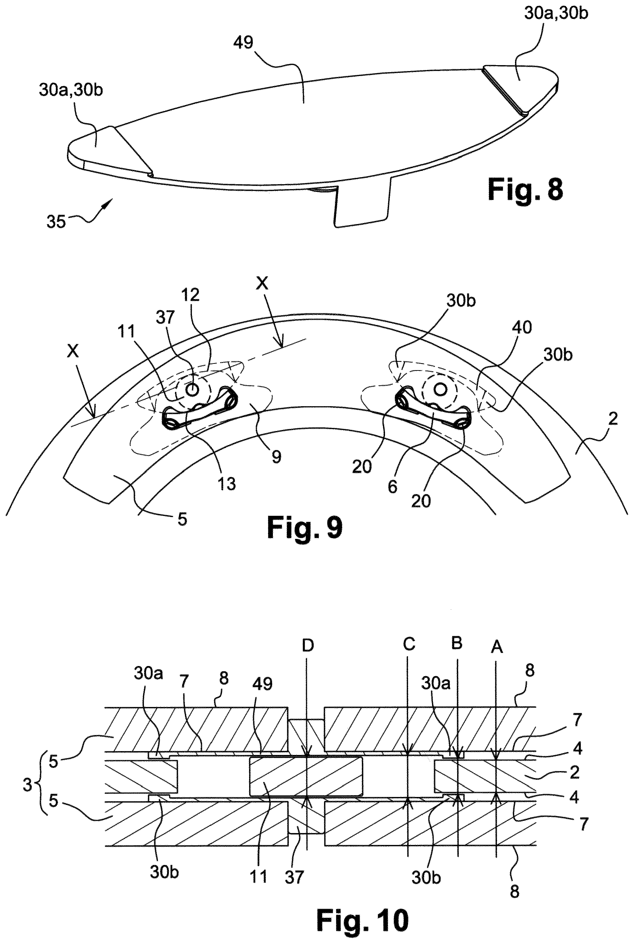

La figure 8 représente de façon isolée une première ou deuxième pièce d'interposition 35 selon une première variante du deuxième exemple de mise en oeuvre de l'invention. Cette pièce d'interposition 35 peut être montée indifféremment sur une première masse pendulaire 5 ou sur une deuxième masse pendulaire 5 pour fournir la première partie 30a ou la deuxième partie 30b d'un organe de butée pour l'un des organes de roulement 11 d'un corps pendulaire 3.

Comme représenté sur la figure 8, chaque extrémité circonférentielle de la pièce d'interposition 40 forme selon cette première variante une portion en relief, chacune de ces portions en relief définissant une portion de la première partie 30a d'un organe de butée 30 lorsque la pièce d'interposition 35 est montée sur la première masse pendulaire 5 et chacune de ces portions en relief définissant une portion de la deuxième partie 30b de l'organe de butée 30 lorsque la pièce d'interposition 35 est montée sur la deuxième masse pendulaire 5.

L'extrémité angulaire dans le sens trigonométrique de la zone d'interposition 40 définit ainsi une portion en saillie permettant l'arrêt dans le sens trigonométrique de l'organe de roulement 11 tandis que l'extrémité angulaire dans le sens non trigonométrique de la zone d'interposition 40 définit une portion en saillie permettant l'arrêt dans le sens non trigonométrique de l'organe de roulement 11.

Comme on peut le voir sur la figure 10, sur laquelle les dimensions axiales A, B, C et D correspondent à celles déjà mentionnées en référence à la figure 4, les extrémités circonférentielles de la zone d'interposition 40, qui définissent chacune une portion de la première partie 30a de l'organe de butée lorsqu'elles appartiennent à une première pièce d'interposition 35 et qui définissent chacune une portion de la deuxième partie 30b de cet organe de butée 30 lorsqu'elles appartiennent à une deuxième pièce d'interposition 35, réduisent localement la dimension de l'espace axial défini entre les deux faces en regard 7 de masses pendulaires 5 d'un même corps pendulaire 3. L'espace axial prend alors localement une dimension axiale de valeur B qui est inférieure à la dimension axiale D de l'organe de roulement 11, de sorte que ce dernier ne peut se déplacer depuis sa position au repos de la figure 9 dans l'espace axial au-delà de la position de butée formée par la présence axialement superposée d'une première partie 30a et d'une deuxième partie 30b d'un organe de butée 30.

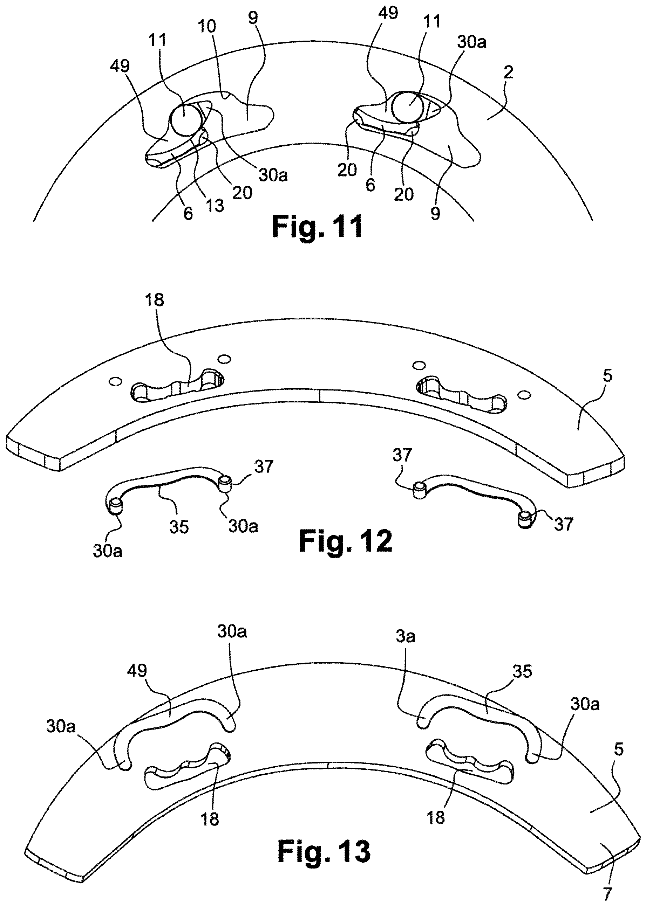

Comme on peut le voir sur la figure 11, sur laquelle seule la première masse pendulaire 5 est représentée dans un souci de clarté du dessin, et qui correspond à une position du corps pendulaire 3 en butée contre le support 2 à l'issue d'un déplacement depuis la position de repos lors du filtrage d'une oscillation de torsion, chaque organe de roulement 11 guidant le déplacement de ce corps pendulaire 3 repose contre une extrémité en saillie de la zone d'interposition 40 d'une pièce d'interposition axiale 35. Le déplacement de chaque organe de roulement 11 dans la fenêtre 9 au-delà de l'organe de liaison 6 avec lequel il coopère est ainsi évité.

Toujours selon la première variante du deuxième exemple de mise en oeuvre de l'invention, on constate sur la figure 10 que la fraction 49 de chaque zone d'interposition 40 située entre les extrémités angulaires de cette zone d'interposition 40 est disposée radialement au niveau de l'organe de roulement 11. Ainsi, pour toute position de ce dernier le long de la deuxième piste de roulement 13 définie par un organe de liaison 6, la fraction 49 peut être disposée axialement entre l'organe de roulement 11 et la masse pendulaire 5 portant cette pièce d'interposition, de sorte que le contact axial direct entre cet organe de roulement 11 et cette masse pendulaire 5 est évité.

On va maintenant décrire en référence aux figures 12 à 14 une deuxième variante du deuxième exemple de mise en oeuvre de l'invention.

Selon cette deuxième variante, les pièces d'interposition 35 servent encore à former une butée circonférentielle à la fois dans le sens trigonométrique et dans le sens non trigonométrique pour les organes de roulement 11. Néanmoins, selon cette deuxième variante, la forme de ces pièces d'interposition 35 est autre.

Comme on peut le voir sur les figures 12 à 14, les extrémités circonférentielles de la zone d'interposition 40 font toujours saillie dans l'espace axial, de manière à réduire localement la dimension axiale de ce dernier à une valeur inférieure à la dimension axiale D de l'organe de roulement 11.

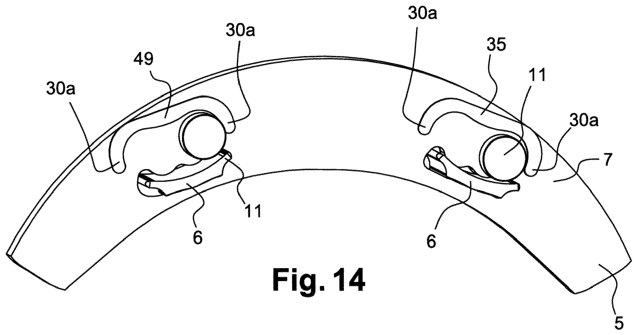

La fraction 49 de la zone d'interposition 40 est ici autre. Cette fraction d'interposition 49 est ici radialement déportée vers l'extérieur par rapport aux extrémités de cette zone d'interposition 40. Ainsi, comme cela est apparent sur la figure 14, cette fraction 49 n'est pas axialement interposée entre l'organe de roulement 11 et la masse pendulaire 5 portant cette pièce d'interposition 35.

On constante également que, selon cette deuxième variante, chaque pièce d'interposition 35 présente une zone d'interposition 40 dont la dimension axiale reste sensiblement constante.

L'invention n'est pas limitée aux exemples qui viennent d'être décrits.

Dans un exemple non représenté, chaque masse pendulaire 5 est associée à une unique pièce d'interposition 35 et cette unique pièce d'interposition interagit avec chaque organe de roulement 11 guidant le déplacement du corps pendulaire 3, de manière à empêcher le déplacement de ces organes de roulement 11 au-delà de leurs positions de butée. Ainsi, la première masse pendulaire 5 n'est alors associée qu'à une seule première pièce d'interposition 35 et la deuxième masse pendulaire 5 n'est associée qu'à une seule deuxième pièce d'interposition 35.

## Revendications

1. Dispositif d'amortissement d'oscillations de torsion (1), comprenant :
- au moins un support (2) apte à se déplacer en rotation autour d'un axe (X),
- une pluralité de corps pendulaires (3) mobiles par rapport au support (2), chaque corps pendulaire (3) comprenant :
- une première et une deuxième masses pendulaires (5) espacées axialement l'une par rapport à l'autre, la première masse pendulaire (5) étant disposée axialement d'un premier côté (4) du support (2) et la deuxième masse pendulaire (5) étant disposée axialement d'un deuxième côté (4) du support (2), et
- au moins deux organes de liaison (6) de la première et de la deuxième masses pendulaires (5), appariant lesdites masses.
- une pluralité d'organes de roulement (11), chaque organe de roulement (11) coopérant avec une première piste de roulement (12) solidaire du support (2) et avec une deuxième piste de roulement solidaire (13) d'un corps pendulaire (3) et définie par un des organes de liaison (6) de ce corps pendulaire (3), de manière à guider le déplacement de ce corps pendulaire (3) par rapport au support (2),
**caractérisé en ce que** chaque corps pendulaire (3) comprend pour chaque organe de roulement (11) guidant le déplacement de ce corps pendulaire (3) au moins un organe de butée (30), cet organe de butée (30) faisant saillie dans l'espace axial défini entre les deux masses pendulaires (5) de ce corps pendulaire (3) de manière à empêcher le déplacement de l'organe de roulement (11) au-delà d'au moins une position de butée.

2. Dispositif selon la revendication 1, l'organe de butée (30) comprenant :
- une portion faisant saillie dans l'espace axial défini entre les deux masses pendulaires (5) du corps pendulaire (3) de manière à empêcher le déplacement de l'organe de roulement (11) au-delà d'une position de butée dans le sens trigonométrique, et
- une portion faisant saillie dans l'espace axial défini entre les deux masses pendulaires (5) du corps pendulaire (3) de manière à empêcher le déplacement de l'organe de roulement (11) au-delà d'une position de butée dans le sens non-trigonométrique.

3. Dispositif selon la revendication 1, chaque corps pendulaire (3) comprenant pour chaque organe de roulement (11) guidant le déplacement de ce corps pendulaire (3) deux organes de butée (30) distincts, l'un de ces deux organes de butée (30) faisant saillie dans l'espace axial défini entre les deux masses pendulaires (5) du corps pendulaire (3) de manière à empêcher le déplacement de l'organe de roulement (11) au-delà d'une position de butée dans le sens trigonométrique et l'autre de ces deux organes de butée (30) faisant saillie dans l'espace axial défini entre les deux masses pendulaires (5) du corps pendulaire (3) de manière à empêcher le déplacement de l'organe de roulement (11) au-delà d'une position de butée dans le sens non-trigonométrique.

4. Dispositif selon la revendication 2 ou 3, le ou les organes de butée (30) pour chaque organe de roulement (11) étant tel(s) que l'angle mesuré depuis l'axe de rotation (X) du support (2) entre la position de repos de l'organe de roulement (11) et l'une de ses positions de butée circonférentielles soit supérieur à l'angle mesuré depuis l'axe de rotation (X) du support entre cette position de repos et son autre position de butée circonférentielle.

5. Dispositif selon l'une quelconque des revendications précédentes, chaque organe de butée (30) pour organe de roulement (11) présentant deux parties (30a, 30b):
- une première partie (30a) faisant saillie dans l'espace axial en direction de la deuxième masse pendulaire (5), et
- une deuxième partie (30b) faisant saillie dans l'espace axial en direction de la première masse pendulaire (5), les premières et deuxièmes parties (30a, 30b) étant axialement superposées.

6. Dispositif selon la revendication 5, la première partie (30a) d'un organe de butée (30) pour organe de roulement étant formée par un premier plot faisant saillie en direction de la deuxième masse pendulaire (5), et la deuxième partie (30b) de cet organe de butée (30) étant formée par un deuxième plot faisant saillie en direction de la première masse pendulaire (5).

7. Dispositif selon la revendication 6, le premier plot (30a) étant réalisé d'une seule pièce avec la première masse pendulaire (5), et le deuxième plot (30b) étant réalisé d'une seule pièce avec la deuxième masse pendulaire (5).

8. Dispositif selon la revendication 5, la première partie (30a) d'un organe de butée (30) pour organe de roulement (11) étant formée par une portion d'une première pièce d'interposition (35) solidaire de la première masse pendulaire (5), cette première pièce d'interposition (35) permettant d'éviter les contacts axiaux directs entre le support (2) et cette première masse pendulaire (5), et la deuxième partie (30b) de cet organe de butée (30) pour organe de roulement (11) étant formée par une portion d'une deuxième pièce d'interposition (35) solidaire de la deuxième masse pendulaire (5), cette deuxième pièce d'interposition (35) permettant d'éviter les contacts axiaux directs entre le support (2) et cette deuxième masse pendulaire (5).

9. Dispositif selon la revendication 8, la première pièce d'interposition (35) comprenant une zone d'interposition (40) disposée axialement entre la première masse pendulaire (5) et le support (2), chaque extrémité angulaire de cette zone d'interposition (40) définissant respectivement une première et une deuxième portion de la première partie (30a) de l'organe de butée (30) et la deuxième pièce d'interposition (35) comprenant une zone d'interposition (40) disposée axialement entre la deuxième masse pendulaire (5) et le support (2), chaque extrémité angulaire de cette zone d'interposition (40) définissant respectivement une première et une deuxième portion de la deuxième partie (30b) de l'organe de butée (30)..

10. Dispositif selon la revendication 9, la fraction (49) de la zone d'interposition (40) disposée entre les premières et deuxièmes portions de la première (30a), respectivement deuxième (30b), partie de l'organe de butée (30) formant un moyen d'interposition axiale entre l'organe de roulement (11) et la première, respectivement deuxième, masse pendulaire (5).

11. Dispositif selon la revendication 9, la fraction (49) de la zone d'interposition (40) disposée entre les premières et deuxièmes portions de la première (30a), respectivement deuxième (30b), partie de l'organe de butée (30) s'étendant radialement extérieurement par rapport à l'organe de roulement (11).

12. Composant pour système de transmission d'un véhicule automobile, le composant étant notamment un double volant amortisseur ou un disque d'embrayage à friction, comprenant un dispositif d'amortissement (1) selon l'une quelconque des revendications précédentes.

## Patentansprüche

1. Vorrichtung zur Drehschwingungsdämpfung (1), umfassend:
- mindestens einen Träger (2), der in der Lage ist, sich um eine Achse (X) zu drehen,
- mehrere Pendelkörper (3), die bezogen auf den Träger (2) beweglich sind, jeder Pendelkörper (3) umfassend:
- eine erste und eine zweite Pendelmasse (5), die axial bezogen aufeinander beabstandet sind, wobei die erste Pendelmasse (5) axial auf einer ersten Seite (4) des Trägers (2) angeordnet ist und die zweite Pendelmasse (5) axial auf einer zweiten Seite (4) des Trägers (2) angeordnet ist, und
- mindestens zwei Verbindungsglieder (6) der ersten und der zweiten Pendelmasse (5), die die Massen zu einem Paar verbinden,
- mehrere Rollelemente (11), wobei jedes Rollelement (11) mit einer ersten Rollbahn (12), die mit dem Träger (2) fest verbunden ist, und mit einer zweiten Rollbahn (13), die mit einem Pendelkörper (3) fest verbunden ist und von einem der Verbindungsglieder (6) dieses Pendelkörpers (3) bestimmt ist, zusammenwirkt, um die Bewegung dieses Pendelkörpers (3) bezogen auf den Träger (2) zu führen,
**dadurch gekennzeichnet, dass** jeder Pendelkörper (3) für jedes Rollelement (11), das die Bewegungdieses Pendelkörpers (3) führt, mindestens ein Anschlagelement (30) umfasst, wobei dieses Anschlagelement (30) in den axialen Raum absteht, der zwischen den zwei Pendelmassen (5) dieses Pendelkörpers (3) definiert ist, um die Bewegung des Rollelements (11) über mindestens eine Anschlagposition hinaus zu verhindern.

2. Vorrichtung nach Anspruch 1, das Anschlagelement (30) umfassend:
- einen Abschnitt, der in den axialen Raum absteht, der zwischen den zwei Pendelmassen (5) des Pendelkörpers (3) definiert ist, um die Bewegung gegen den Uhrzeigersinn des Rollelements (11) über eine Anschlagposition hinaus zu verhindern, und
- einen Abschnitt, der in den axialen Raum absteht, der zwischen den zwei Pendelmassen (5) des Pendelkörpers (3) definiert ist, um die Bewegung im Uhrzeigersinn des Rollelements (11) über eine Anschlagposition hinaus zu verhindern.

3. Vorrichtung nach Anspruch 1, wobei jeder Pendelkörper (3) für jedes Rollelement (11), das die Bewegung dieses Pendelkörpers (3) führt, zwei getrennte Anschlagelemente (30) umfasst, wobei eins dieser Anschlagelemente (30) in den axialen Raum absteht, der zwischen den zwei Pendelmassen (5) des Pendelkörpers (3) definiert ist, um die Bewegung gegen den Uhrzeigersinn des Rollelements (11) über eine Anschlagposition hinaus zu verhindern, und das andere dieser zwei Anschlagelemente (30) in den axialen Raum absteht, der zwischen den zwei Pendelmassen (5) des Pendelkörpers (3) definiert ist, um die Bewegung im Uhrzeigersinn des Rollelements (11) über eine Anschlagposition hinaus zu verhindern.

4. Vorrichtung nach Anspruch 2 oder 3, wobei das oder die Anschlagelemente (30) für jedes Rollelement (11) derart ist oder sind, dass der Winkel, der von der Drehachse (X) des Trägers (2) zwischen der Ruheposition des Rollelements (11) und einer seiner Umfangsanschlagpositionen gemessen ist, größer als der Winkel ist, der von der Drehachse (X) des Trägers zwischen dieser Ruheposition und seiner anderen Umfangsanschlagposition gemessen wird.

5. Vorrichtung nach einem der vorhergehenden Ansprüche, wobei jedes Anschlagelement (30) für ein Rollelement (11) zwei Bereiche (30a, 30b) aufweist:
- einen ersten Bereich (30a), der in den axialen Raum in Richtung der zweiten Pendelmasse (5) absteht, und
- einen zweiten Bereich (30b), der in den axialen Raum in Richtung der ersten Pendelmasse (5) absteht, wobei der erste und der zweite Bereich (30a, 30b) axial übereinanderliegen.

6. Vorrichtung nach Anspruch 5, wobei der erste Bereich (30a) eines Anschlagelements (30) für ein Rollelement von einem ersten Block gebildet ist, der in Richtung der zweiten Pendelmasse (5) absteht, und der zweite Bereich (30b) dieses Anschlagelements (30) von einem zweiten Block gebildet ist, der in Richtung der ersten Pendelmasse (5) absteht.

7. Vorrichtung nach Anspruch 6, wobei der erste Block (30a) mit der ersten Pendelmasse (5) einstückig ausgebildet ist und der zweite Block (30b) mit der zweiten Pendelmasse (5) einstückig ausgebildet ist.

8. Vorrichtung nach Anspruch 5, wobei der erste Bereich (30a) eines Anschlagelements (30) für ein Rollelement (11) von einem Abschnitt eines ersten Zwischenstücks (35) gebildet ist, das mit der ersten Pendelmasse (5) fest verbunden ist, wobei dieses erste Zwischenstück (35) erlaubt, die direkten axialen Kontakte zwischen dem Träger (2) und dieser ersten Pendelmasse (5) zu verhindern, und der zweite Bereich (30b) dieses Anschlagelements (30) für ein Rollelement (11) von einem Abschnitt eines zweiten Zwischenstücks (35) gebildet ist, das mit der zweiten Pendelmasse (5) fest verbunden ist, wobei dieses zweite Zwischenstück (35) erlaubt, die direkten axialen Kontakte zwischen dem Träger (2) und dieser zweiten Pendelmasse (5) zu verhindern.

9. Vorrichtung nach Anspruch 8, wobei das erste Zwischenstück (35) eine Zwischenzone (40) umfasst, die axial zwischen der ersten Pendelmasse (5) und dem Träger (2) angeordnet ist, wobei jedes Winkelende dieser Zwischenzone (40) jeweils einen ersten und einen zweiten Abschnitt des ersten Bereichs (30a) des Anschlagelements (30) definiert und das zweite Zwischenstück (35) eine Zwischenzone (40) umfasst, die axial zwischen der zweiten Pendelmasse (5) und dem Träger (2) angeordnet ist, wobei jedes Winkelende dieser Zwischenzone (40) jeweils einen ersten und einen zweiten Abschnitt des zweiten Bereichs (30b) des Anschlagelements (30) definiert.

10. Vorrichtung nach Anspruch 9, wobei der Anteil (49) der Zwischenzone (40), der zwischen dem ersten und dem zweiten Abschnitt des ersten (30a) bzw. zweiten (30b) Bereichs des Anschlagelements (30) angeordnet ist, ein Mittel zum axialen Einfügen zwischen dem Rollelement (11) und der ersten bzw. zweiten Pendelmasse (5) bildet.

11. Vorrichtung nach Anspruch 9, wobei der Anteil (49) der Zwischenzone (40), der zwischen dem ersten und dem zweiten Abschnitt des ersten (30a) bzw. zweiten (30b) Bereichs des Anschlagelements (30) angeordnet ist, sich radial äußerlich bezogen auf das Rollelement (11) erstreckt.

12. Komponente für ein Antriebssystem eines Kraftfahrzeugs, wobei die Komponente insbesondere ein Zweimassen-Dämpfungsschwungrad oder eine Reibungskupplungsscheibe ist, umfassend eine Dämpfungsvorrichtung (1) nach einem der vorhergehenden Ansprüche.

## Claims

1. Device for damping torsional oscillations (1), comprising:
- at least one holder (2) that is able to rotate about an axis (X),
- a plurality of pendulum assemblies (3) that are able to move with respect to the holder (2), each pendulum assembly (3) comprising:
- a first and a second pendulum mass (5) that are spaced apart axially from one another, the first pendulum mass (5) being disposed axially on a first side (4) of the holder (2) and the second pendulum mass (5) being disposed axially on a second side (4) of the holder (2), and
- at least two connecting members (6) for connecting the first and the second pendulum mass (5), pairing up said masses,
- a plurality of rolling elements (11), each rolling element (11) cooperating with a first raceway (12) integrated in the holder (2) and with a second raceway (13) integrated in a pendulum assembly (3) and defined by one of the connecting members (6) of this pendulum assembly (3), so as to guide the movement of this pendulum assembly (3) with respect to the holder (2), **characterized in that** each pendulum assembly (3) comprises, for each rolling element (11) guiding the movement of this pendulum assembly (3), at least one abutment member (30), this abutment member (30) protruding into the axial space defined between the two pendulum masses (5) of this pendulum assembly (3) so as to prevent the movement of the rolling element (11) beyond at least one end position.

2. Device according to Claim 1, the abutment member (30) comprising:
- a portion that protrudes into the axial space defined between the two pendulum masses (5) of the pendulum assembly (3) so as to prevent the movement of the rolling element (11) beyond an end position in the anticlockwise direction, and
- a portion that protrudes into the axial space defined between the two pendulum masses (5) of the pendulum assembly (3) so as to prevent the movement of the rolling element (11) beyond an end position in the clockwise direction.

3. Device according to Claim 1, each pendulum assembly (3) comprising, for each rolling element (11) guiding the movement of this pendulum assembly (3), two separate abutment members (30), one of these two abutment members (30) protruding into the axial space defined between the two pendulum masses (5) of the pendulum assembly (3) so as to prevent the movement of the rolling element (11) beyond an end position in the anticlockwise direction, and the other of these two abutment members (30) protruding into the axial space defined between the two pendulum masses (5) of the pendulum assembly (3) so as to prevent the movement of the rolling element (11) beyond an end position in the clockwise direction.

4. Device according to Claim 2 or 3, the abutment member(s) (30) for each rolling element (11) being such that the angle measured from the axis of rotation (X) of the holder (2) between the rest position of the rolling element (11) and one of the circumferential end positions thereof is greater than the angle measured from the axis of rotation (X) of the holder between this rest position and the other circumferential end position thereof.

5. Device according to any one of the preceding claims, each abutment member (30) for a rolling element (11) having two parts (30a, 30b):
- a first part (30a) that protrudes into the axial space in the direction of the second pendulum mass (5), and
- a second part (30b) that protrudes into the axial space in the direction of the first pendulum mass (5), the first and second parts (30a, 30b) being axially superposed.

6. Device according to Claim 5, the first part (30a) of a abutment member (30) for a rolling element being formed by a first protuberance that protrudes in the direction of the second pendulum mass (5), and the second part (30b) of this abutment member (30) being formed by a second protuberance that protrudes in the direction of the first pendulum mass (5).

7. Device according to Claim 6, the first protuberance (30a) being produced in one piece with the first pendulum mass (5), and the second protuberance (30b) being produced in one piece with the second pendulum mass (5).

8. Device according to Claim 5, the first part (30a) of a abutment member (30) for a rolling element (11) being formed by a portion of a first interposition piece (35) secured to the first pendulum mass (5), this first interposition piece (35) making it possible to avoid direct axial contact between the holder (2) and this first pendulum mass (5), and the second part (30b) of this abutment member (30) for a rolling element (11) being formed by a portion of a second interposition piece (35) secured to the second pendulum mass (5), this second interposition piece (35) making it possible to avoid direct axial contact between the holder (2) and this second pendulum mass (5).

9. Device according to Claim 8, the first interposition piece (35) comprising an interposition zone (40) disposed axially between the first pendulum mass (5) and the holder (2), each angular end of this interposition zone (40) defining a first portion and a second portion, respectively, of the first part (30a) of the abutment member (30), and the second interposition piece (35) comprising an interposition zone (40) disposed axially between the second pendulum mass (5) and the holder (2), each angular end of this interposition zone (40) defining a first portion and a second portion, respectively, of the second part (30b) of the abutment member (30).

10. Device according to Claim 9, the fraction (49) of the interposition zone (40) disposed between the first and second portion of the first part (30a) and second part (30b), respectively, of the abutment member (30) forming an axial interposition means between the rolling element (11) and the first pendulum mass (5) and second pendulum mass (5), respectively.

11. Device according to Claim 9, the fraction (49) of the interposition zone (40) disposed between the first and second portions of the first part (30a) and second part (30b), respectively, of the abutment member (30) extending radially outwards with respect to the rolling element (11).

12. Component for a transmission system of a motor vehicle, the component being notably a dual-mass flywheel or a friction clutch disc, comprising a damping device (1) according to any one of the preceding claims.
